# EUROPEAN PATENT APPLICATION

(11) **EP 3 879 810 A1**
(43) Date of publication of application: **15.09.2021**
(21) Application number: 19882792.5
(22) Date of filing: 20.09.2019
(51) Int. Cl.: H04N 5/232, G06T 7/00, G06T 7/80, G08G 1/16, H04N 5/225, G01C 3/00, G01C 3/06

(54) **IMAGING DEVICE**

(30) Priority: 06.11.2018 JP 2018208967
(71) Applicant: Hitachi Astemo, Ltd., Hitachinaka-shi, Ibaraki 312-8503 (JP)
(72) Inventor: TADA, Naoya, Hitachinaka-shi, Ibaraki 312-8503 (JP); HORINAGA, Maho, Hitachinaka-shi, Ibaraki 312-8503 (JP); OTSUKA, Yuji, Hitachinaka-shi, Ibaraki 312-8503 (JP)
(74) Representative: MERH-IP Matias Erny Reichl Hoffmann Patentanwälte PartG mbB
(86) International application number: PCT/JP2019/036910
(87) International publication number: WO 2020/095549

(57) **Abstract**

Provided is an imaging device that can correct optical axis offset in the vertical direction at a high accuracy. An imaging unit 11 (first imaging unit) captures a standard image (first image). An imaging unit 12 (second imaging unit) captures a reference image (second image). A parallax image generation unit 13 generates a parallax image from the standard image and the reference image. A region-of-interest detection unit 14 detects a region of interest in which the parallax value from the parallax image is a certain value. An optical axis offset detection unit 15 detects a vertical-direction optical axis offset amount between the standard image and the reference image using pattern information of the region of interest. An optical axis offset correction unit 16 corrects the optical axis offset on the basis of the optical axis offset amount of the optical axis in the vertical direction.

## Description

### Technical Field

The present invention relates to an imaging device.

### Background Art

An in-vehicle stereo camera mounted on a vehicle acquires a parallax image by processing an image according to a corresponding calibration parameter. Using the parallax image, a distance to a preceding vehicle is measured to implement a driving support system having a function as a collision damage mitigation brake or the like. However, if the stereo camera has an optical axis offset due to deterioration over time, it is not possible to generate an accurate parallax image. As a result, the distance to the preceding vehicle cannot be measured correctly, and the driving support system may not operate properly.

For this reason, various techniques for calibrating the optical axis have been proposed in order to generate an accurate parallax image. Examples thereof include PTL 1 and PTL 2.

A device for diagnosing a stereo camera according to PTL 1 (JP 2011-180022 A) is characterized in that a traffic light is used as a feature object to detect an angular offset in a vertical direction. The image processing device according to PTL 2 (JP 2016-118458 A) detects an optical axis offset in a horizontal direction and in a vertical direction from a difference in position between feature points to update calibration parameters. Since the calibration parameters are prepared for each temperature, even if the tendency of the optical axis offset changes due to deterioration over time, the optical axis offset can be corrected based thereon.

### Citation List

### Patent Literature

PTL 1: JP 2011-180022 A
PTL 2: JP 2016-118458 A

### Summary of Invention

### Technical Problem

In the technique disclosed in PTL 1, an optical axis offset amount is detected using a traffic light, and the environment for performing calibration is limited.

In the technique disclosed in PTL 2, a corresponding point is searched for, by using information on a minute-size pattern called a feature point, to calibrate an optical axis offset. Since a region of interest used in searching for corresponding point is in a minute size in such a method, it is likely that the region of interest may be mistakenly searched for as the corresponding point.

As a search method for finding corresponding points of pattern information between a plurality of images, there is pattern matching. If the size of the region of interest including the pattern information is small, pattern matching is performed with few features, making it difficult to search for the corresponding point. On the other hand, if the size of the region of interest is large, the region of interest includes a lot of pattern information, making it easy to search for the corresponding point.

However, when a plurality of subjects in different distances are captured within the region of interest, an occlusion problem occurs and the accuracy of pattern matching decreases. This is because when the occlusion occurs, the pattern information differs between the plurality of images.

Here, when calibrating the optical axis offset using the result of searching for the corresponding point, it is necessary to improve the accuracy of pattern matching in order to improve the accuracy of calibration.

An object of the present invention is to provide an imaging device capable of correcting an optical axis offset in a vertical direction at a high accuracy.

### Solution to Problem

In order to achieve the aforementioned object, the present invention includes: a first imaging unit that captures a first image; a second imaging unit that captures a second image; a parallax image generation unit that generates a parallax image from the first image and the second image; a region-of-interest detection unit that detects a region of interest that is a region in which a parallax value is considered constant from the parallax image; an optical axis offset detection unit that detects an optical axis offset amount in a vertical direction between the first image and the second image using pattern information on the region of interest; and an optical axis offset correction unit that corrects the optical axis offset on the basis of the optical axis offset amount.

### Advantageous Effects of Invention

According to the present invention, it is possible to correct an optical axis offset in the vertical direction at a high accuracy. Other problems, configurations, and effects that are not described above will be apparent from the following description of embodiments.

### Brief Description of Drawings

[FIG. 1] FIG. 1 is a block diagram illustrating an overall configuration of an imaging device.
[FIG. 2] FIG. 2 is a diagram illustrating a flow of a process for detecting a region of interest.
[FIG. 3] FIG. 3 is a parallax frequency distribution chart with respect to vertical-direction coordinates.
[FIG. 4] FIG. 4 is a parallax value distribution chart with respect to horizontal-direction coordinates.
[FIG. 5] FIG. 5 is a diagram illustrating an example of a learning pattern for pattern matching.
[FIG. 6] FIG. 6 is a diagram for explaining detection of a translational offset caused by a difference in vertical-direction position.
[FIG. 7] FIG. 7 is a diagram for explaining detection of a rotational offset caused by a difference in vertical-direction position.

### Description of Embodiments

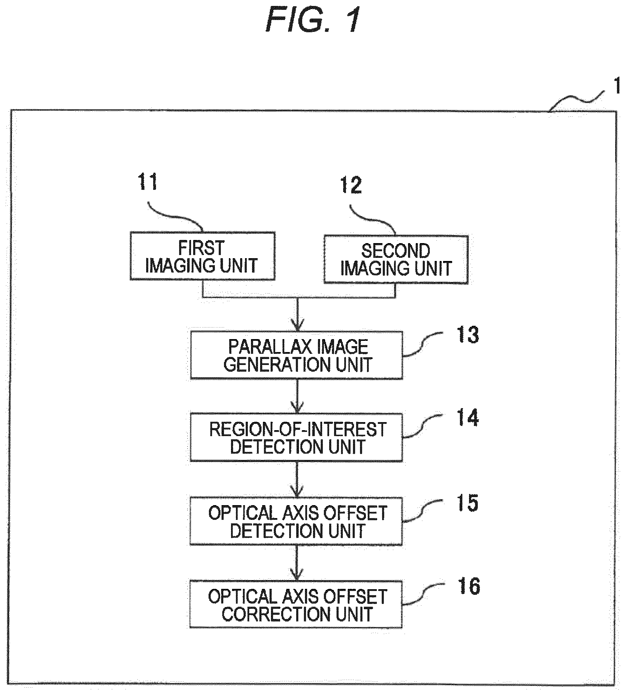

FIG. 1 is a block diagram illustrating an overall configuration of an imaging device 1 according to an embodiment of the present invention. The imaging device 1 includes a pair of imaging units 11 and 12, a parallax image generation unit 13, a region-of-interest detection unit 14, an optical axis offset detection unit 15, and an optical axis offset correction unit 16.

In images obtained from the imaging units 11 and 12 installed to be spaced apart from each other at a predetermined distance in a horizontal direction, an epipolar line is parallel to a horizontal axis at the same height on the images. Thus, searching for a corresponding point needs to be performed only in the horizontal direction.

The imaging units 11 and 12 include imaging elements, etc. The parallax image generation unit 13 includes an image processing circuit such as a graphics processing unit (GPU) or a field-programmable gate array (FPGA). The region-of-interest detection unit 14, the optical axis offset detection unit 15, and the optical axis offset correction unit 16 are implemented as functions of, for example, a central processing unit (CPU).

The parallax image generation unit 13 extracts a feature point with a change in gray scale on a standard image (first image) that is an image captured by the imaging unit 11 (first imaging unit). With respect to this feature point, a reference image (second image) captured by the other imaging unit 12 (second imaging unit) is searched for a position where the same subject is reflected. For the search for a corresponding point, a known technique such as a sum of absolute difference (SAD) can be used. The parallax image generation unit 13 calculates a difference of each extracted feature point from a corresponding position on the reference image as a parallax. The parallax image generation unit 13 generates a parallax image from the standard image (first image) and the reference image (second image).

The region-of-interest detection unit 14 detects a region of interest to be used by the optical axis offset detection unit 15. Using the parallax obtained from the parallax image generation unit, the region-of-interest detection unit 14 determines a region of interest from a parallax distribution, which will be described below. In addition, the region-of-interest detection unit 14 determines a region of interest by learning a preceding vehicle or a road sign in advance to be used as a template when the image is searched through template matching.

In other words, the region-of-interest detection unit 14 learns a preceding vehicle and a road sign in advance as templates, and detects a region of interest through template matching. Accordingly, the accuracy of pattern matching can be increased. As a result, an optical axis offset in a vertical direction can be corrected at a high accuracy.

The region of interest is large in size to facilitate the search for corresponding points between the pair of images. In addition, in order to increase accuracy in the search for the corresponding points, one feature object existing in an equal distance is included in the region of interest.

The optical axis offset detection unit 15 detects a translational optical axis offset amount (offset) in the vertical direction between the pair of images, using one or more regions of interest detected by the region-of-interest detection unit 14. In addition, the optical axis offset detection unit 15 detects a rotational optical axis offset amount (rotation) in the vertical direction between the pair of images, using two or more regions of interest.

The optical axis offset correction unit 16 updates a calibration parameter to be used when generating a parallax image from images captured by the imaging units 11 and 12 in a next imaging cycle. Accordingly, it is possible to acquire a parallax image in which the optical axis offset is corrected.

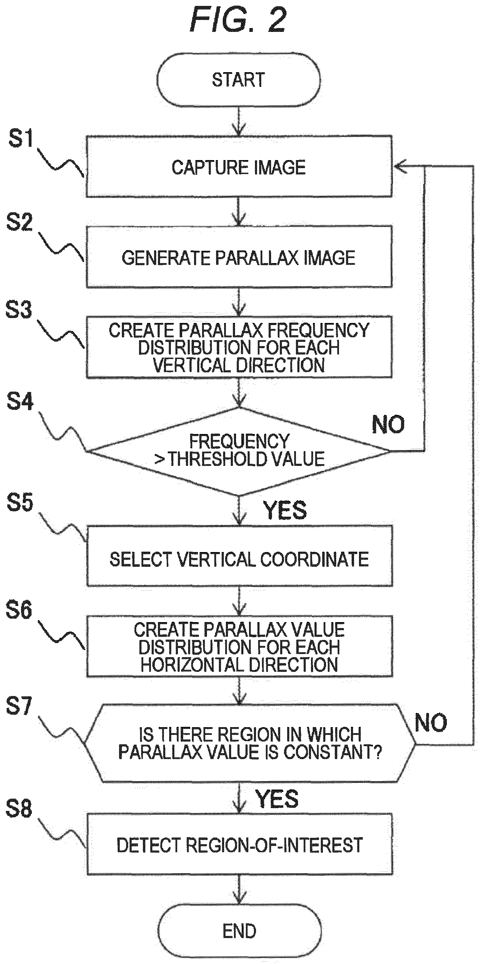

A method of detecting a region of interest will be described with reference to a flowchart of FIG. 2.

In step S1, the imaging units 11 and 12 capture images.

In step S2, the parallax image generation unit 13 generates a parallax image. A parallax value is calculated through template matching. Since the matching is searching in the horizontal direction, if there is an optical axis offset in an up-down direction (vertical direction) between the imaging units 11 and 12, a matching evaluation value decreases.

Next, a process in steps S3 to S8 performed by the region-of-interest detection unit 14 will be described.

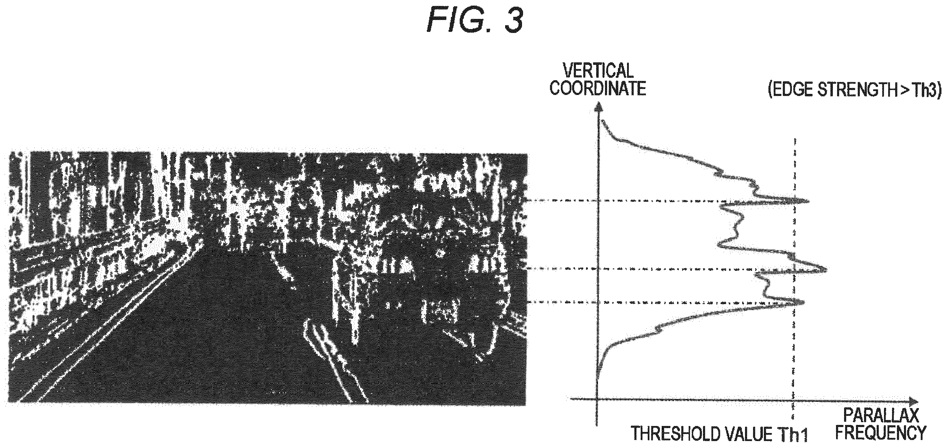

In step S3, a distribution of parallax frequency is created with respect to vertical-direction coordinates of the parallax image (FIG. 3). Here, the distribution is created based only on whether or not there is a parallax, regardless of whether the parallax is large or small. At that time, in order to use only a highly reliable parallax on the image captured by the imaging unit 11, only a parallax corresponding to a coordinate with a great change in gray scale is valid, and a parallax corresponding to a coordinate with a small change in gray scale, that is, a small edge strength, is put to a vote in the parallax distribution. Accordingly, it is possible to create a distribution of parallax frequency using only a highly reliable feature point.

In other words, the coordinate with a great change in gray scale is associated with a parallax value, and the coordinate with a small change in gray scale is not associated with a parallax value. Here, the edge strength of the coordinate associated with the parallax value is equal to or greater than a threshold value Th3 (third threshold value). Accordingly, a region with a small change in gray scale, such as a road surface or a wall, is excluded from a region of interest, and a region with a great change in gray scale is detected as a region of interest. The region-of-interest detection unit 14 creates a distribution of parallax frequency indicating the number of coordinates associated with the parallax value with respect to vertical-direction coordinates of the parallax image or with respect to divisions of the parallax image equally divided in the vertical direction.

In steps S4 and S5, a plurality of vertical-direction coordinates at which the parallax frequency is greater than a threshold value are selected. That is, the region-of-interest detection unit 14 detects regions of interest with respect to the vertical-direction coordinates or the vertical-direction equally-divided divisions at which the parallax frequency is equal to or greater than a threshold value Th1 (first threshold value) as shown in FIG. 3. Accordingly, it is possible to efficiently detect the regions of interest, each of which is a region in which the parallax value is considered constant, in a range limited to the vertical-direction coordinates or divisions including a plurality of parallax values.

When a texture with a change in gray scale exists on the image obtained by the imaging unit 11, it is calculated as a parallax through the template matching in step S2 and is put to a vote in the frequency distribution in step S3. On the other hand, a region with a small change in gray scale, such as a road surface or a wall, is put to a vote in the frequency distribution in step S3. That is, the coordinate with a high parallax frequency includes a region with a great change in gray scale.

Here, when the parallax frequency is created, the vertical axis is not based on coordinates but on equally-divided divisions, so that a width can be imparted to a vertical coordinate for determination. For example, since a vehicle traveling forward or the like has a width with respect to the vertical-direction coordinate, it is easy to detect a region where a texture exists, such as the vehicle, by creating a distribution of parallax frequency with respect to the equally-divided divisions.

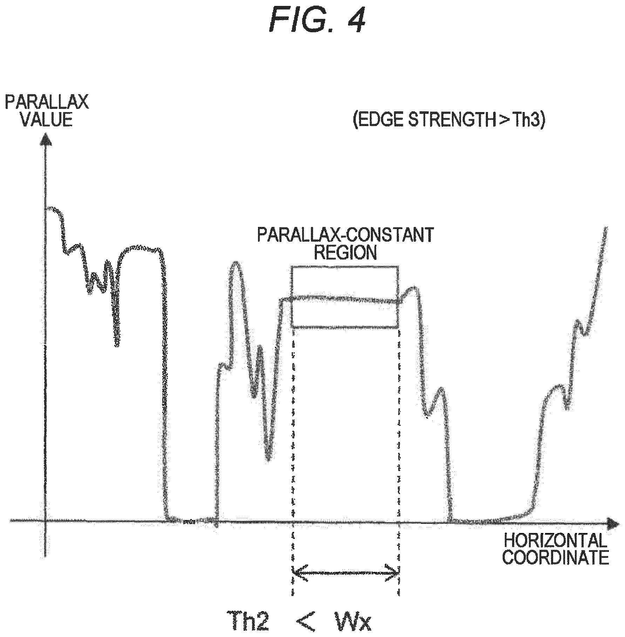

In step S6, a distribution of parallax value is created with respect to horizontal-direction coordinates for the vertical-direction coordinate detected in step S5 (FIG. 4) . That is, the region-of-interest detection unit 14 creates the distribution of parallax value with respect to the horizontal-direction coordinates of the parallax image for the vertical-direction coordinate or division at which the parallax frequency is equal to or greater than the threshold value Th1 (first threshold value). Here, on the image captured by the imaging unit 11, a parallax value for a coordinate with a small change in gray scale is set to "zero". In addition, when a plurality of vertical-direction coordinates are detected in step S5, step S6 is repeatedly performed for each of the detected vertical-direction coordinates.

In step S7, a region where the parallax value is constant (positive constant value) is detected using the parallax value distribution chart created in step S6. Accordingly, it is possible to detect an object existing in the same distance as one region. The object existing in the same distance is what has a parallax value width (a vertical-direction length of a rectangle in FIG. 4) within a threshold value, and the same threshold value is used for a long-distance region and a short-distance region. In the long-distance region, although objects existing in a plurality of distances, rather than in the same distance, are detected as one region of interest, the occlusion problem does not occur. Thus, a large region of interest is preferentially taken.

Here, the region-of-interest detection unit 14 detects a region of interest, which is a region in which the parallax value is considered constant, from the parallax image. Since the region of interest is a region in which the parallax value is considered constant, a subject in an approximately equal distance (a back side of a preceding vehicle, a road sign, or the like) is captured in the region of interest. Therefore, the accuracy of pattern matching can be improved with no occlusion.

In other words, the region-of-interest detection unit 14 detects a region in which the parallax value is considered constant in the parallax value distribution as a region of interest. Accordingly, it is possible to detect a region of interest using the distribution of parallax value with respect to the vertical-direction coordinate or division including a plurality of parallax values.

In addition, when a parallax group with a parallax value width equal to or smaller than a threshold value is detected, it is checked whether or not a horizontal-direction width thereof on the image is equal to or larger than a threshold value. This is because it is desirable to provide a large region of interest in detecting an optical axis offset.

That is, the region-of-interest detection unit 14 detects a region in which the parallax value is considered constant as a region of interest when a horizontal-direction width Wx thereof is equal to or larger than the threshold Th2 (second threshold value) as shown in FIG. 4. Accordingly, a region of interest with a large horizontal-direction width is detected. As a result, pattern information on the region of interest increases, making it easy to search for corresponding points.

In step S8, a position of the region of interest to be used for detecting an optical axis offset is detected. Here, when a plurality of regions of interest can be detected, a region appearing as a large area on the image is preferentially adopted to be used by the optical axis offset detection unit 15 in a subsequent step. That is, when the plurality of regions of interest are detected, the optical axis offset detection unit 15 preferentially uses a region of interest occupying a large area on the parallax image to detect an optical axis offset amount in the vertical direction. Accordingly, pattern information on the region of interest increases, making it easy to search for corresponding points.

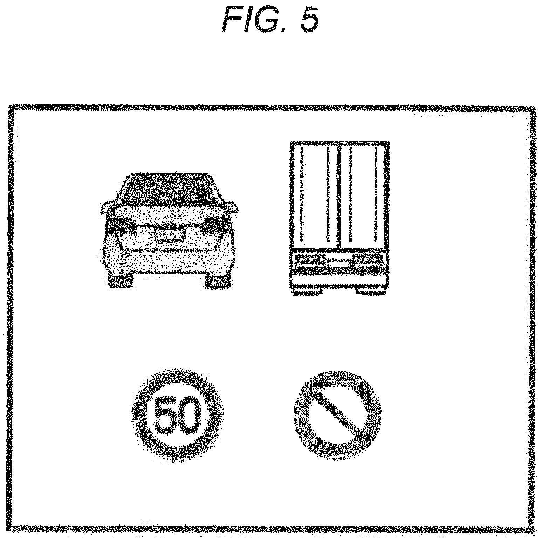

FIG. 5 illustrates a diagram for explaining a method of detecting a region of interest using template matching. After detecting an object on the captured image as a candidate for a preceding vehicle or a road sign, an image size is normalized based on a distance to the object and the object is matched with a pattern prepared as a learning pattern in advance. Since it is desirable that the pattern information in the region of interest includes that only for an object in the same distance, pattern information only for a back side of the preceding vehicle is prepared as the learning pattern of the preceding vehicle prepared in advance. Here, when a plurality of regions of interest can be detected through template matching, a region appearing as a large area on the image is preferentially adopted to be used by the optical axis offset detection unit 15 in a subsequent step.

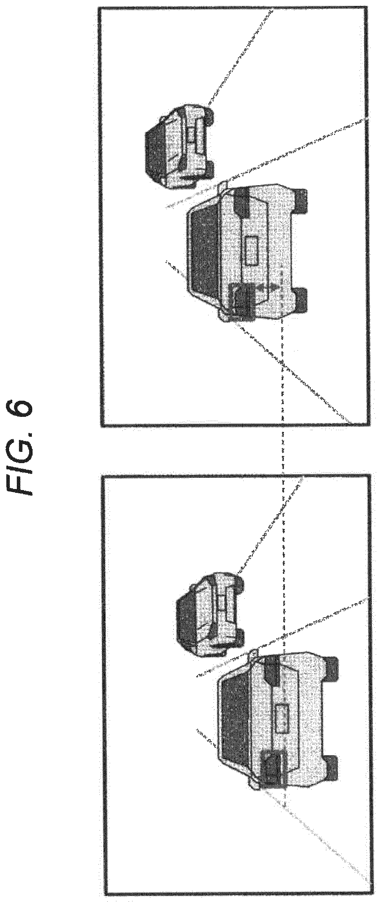

FIG. 6 illustrates a diagram for explaining an outline of a process of detecting a translational optical axis offset amount.

First, the other image (reference image) is searched for a position where the region of interest is captured thereon. Next, a vertical-direction offset amount of the region of interest is detected between the pair of images. That is, the optical axis offset detection unit 15 detects the vertical-direction optical axis offset amount between the standard image (first image) and the reference image (second image) using the pattern information on the region of interest. When there are a plurality of regions of interest, an average of offset amounts calculated for the respective regions of interest is calculated.

In other words, the region-of-interest detection unit 14 detects at least one region of interest, and the optical axis offset detection unit 15 detects a translational optical axis offset amount in the vertical direction between the standard image (first image) and the reference image (second image) using pattern information on the at least one region of interest. The optical axis offset correction unit 16 corrects an optical axis offset on the basis of the translational optical axis offset amount in the vertical direction (optical axis offset amount). Accordingly, the translational optical axis offset in the vertical direction can be corrected.

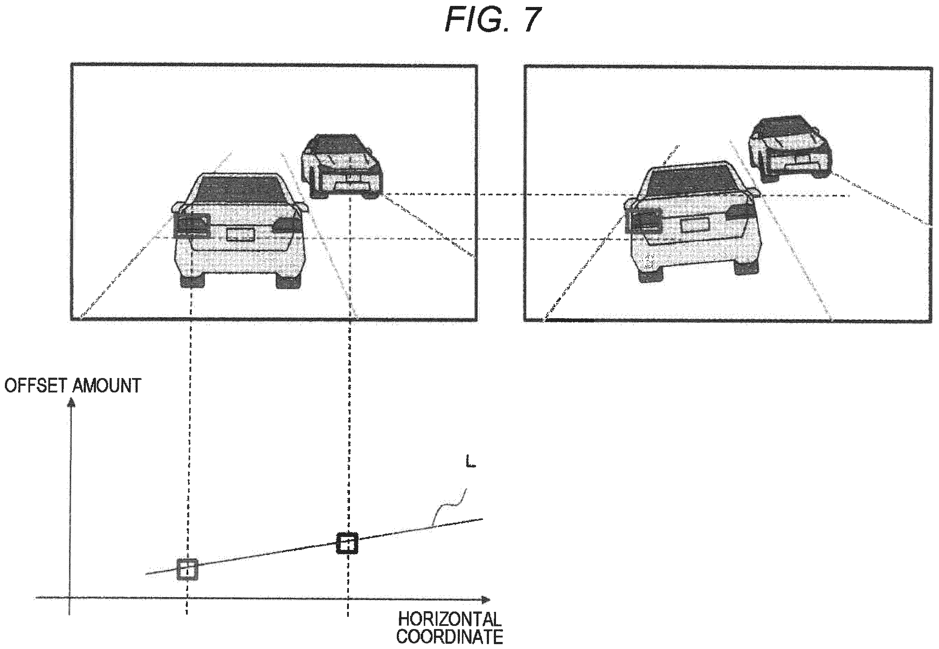

FIG. 7 illustrates a diagram for explaining an outline of a process of detecting a rotational optical axis offset amount.

At least two regions of interest are detected on the reference image, and it is checked whether there is a width (distance) in the horizontal direction between two or more detection positions. Specifically, if the horizontal-direction width between the plurality of regions of interest is equal to or greater than a threshold value, then positions thereof captured on the other image are searched for. Subsequently, vertical-direction offset amounts of the regions of interest are detected between the pair of images. A plurality of detected offset amounts are plotted with respect to the horizontal-direction coordinates on the image, and a rotational offset amount is calculated through approximate calculation such as a least squares method. Specifically, the rotational offset amount is a slope of a straight line L (FIG. 7) obtained through the approximate calculation.

That is, the region-of-interest detection unit 14 detects two or more regions of interest. The optical axis offset detection unit 15 detects the rotational optical axis offset amount in the vertical direction between the standard image (first image) and the reference image (second image) using pattern information on the two or more regions of interest. Accordingly, the rotational optical axis offset in the vertical direction can be corrected.

Specifically, the optical axis offset detection unit 15 determines an approximate straight line from a group of points represented by a combination of the horizontal-direction coordinates of the regions of interest and the vertical-direction optical axis offset amounts of the regions of interest, and the rotational optical axis offset amount is a slope of the approximate straight line. Accordingly, the rotational optical axis offset amount in the vertical direction can be easily calculated.

As described above, according to this embodiment, it is possible to correct an optical axis offset in the vertical direction at a high accuracy. Specifically, since the region of interest is a region in which the parallax value is considered constant, a subject in an approximately equal distance (a back side of a preceding vehicle, a road sign, or the like) is captured in the region of interest. Therefore, the accuracy of pattern matching can be improved with no occlusion. As a result, an optical axis offset (a translational offset or a rotational offset) in the vertical direction can be corrected at a high accuracy.

It should be noted that the present invention is not limited to the above-described embodiment, and includes various modifications. For example, the above-described embodiment has been described in detail in order to explain the present invention in an easy-to-understand manner, and is not necessarily limited to having all the configurations described above. Further, a part of the configuration of one embodiment may be replaced with that of the configuration of another embodiment, and the configuration of one embodiment may be added to the configuration of another embodiment. Further, with respect to a part of the configuration of each embodiment, it is possible to perform addition of another configuration, deletion, or replacement with another configuration.

Further, each of the above-described configurations, functions, and the like may be implemented by hardware, for example, by designing an integrated circuit for a part or all thereof. Further, each of the above-described configurations, functions, and the like may be implemented by software by interpreting and executing a program for implementing each of the functions through a processor. Information such as programs, tables, and files for implementing the respective functions can be stored in a storage device such as a memory, a hard disk, or a solid state drive (SSD), or a recording medium such as an IC card, an SD card, or a DVD.

It should be noted that the embodiment of the present invention may be implemented in the following aspects.
(1). An imaging device with a first imaging unit and a second imaging unit installed to be spaced apart from each other only at a predetermined distance in a horizontal direction, the imaging device including: a parallax image generation unit that generates a parallax image from a first image captured by the first imaging unit and a second image captured by the second imaging unit; a region-of-interest detection unit that detects a region of interest using the parallax image; an optical axis offset detection unit that detects an optical axis offset amount in a vertical direction between the imaging units using pattern information on the region of interest; and an optical axis offset correction unit that corrects an optical axis offset, wherein the region-of-interest detection unit detects a similar-parallax region.
(2). The imaging device according to (1), wherein in the detection of the similar-parallax region, a distribution of parallax frequency is created with respect to vertical-direction coordinates or equally-divided divisions of the parallax image, and a vertical-direction coordinate with a high parallax frequency is detected as a vertical-direction coordinate of the region of interest.
(3). The imaging device according to (1), wherein based on the detected vertical-direction coordinate, a distribution of parallax value is created with respect to horizontal-direction coordinates of the parallax image, and a region in which a parallax group of the same value exists is detected.
(4). The imaging device according to (3), wherein the parallax group of the same value has a horizontal-direction image width equal to or greater than a threshold value.
(5). The imaging device according to (2) or (3), wherein a parallax to be used from the parallax distribution has an edge strength equal to or greater than a threshold value.
(6). The imaging device according to (1), wherein in the detection of the similar-parallax region, a preceding vehicle and a road sign are learned as templates in advance, and the region of interest is detected through template matching.
(7). The imaging device according to any one of (1) to (6), wherein in the detection of the region of interest, a region of interest appearing as a large area on the first image is preferentially detected.
(8). The imaging device according to any one of (1) to (7), wherein one or more regions of interest are detected, and the optical axis offset detection unit detects a translational optical axis offset amount in the vertical direction between the first image and the second image.
(9). The imaging device according to any one of (1) to (7), wherein two or more regions of interest are detected, and the optical axis offset detection unit detects a rotational optical axis offset amount in the vertical direction between the first image and the second image.

According to (1) to (9), it is possible to calibrate an optical axis offset in the vertical direction of the stereo camera (imaging device) at a high accuracy for any feature object having a flat region.

### Reference Signs List

- 1: imaging device
- 11: imaging unit (first imaging unit)
- 12: imaging unit (second imaging unit)
- 13: parallax image generation unit
- 14: region-of-interest detection unit
- 15: optical axis offset detection unit
- 16: optical axis offset correction unit

## Claims

1. An imaging device, comprising:
a first imaging unit that captures a first image;
a second imaging unit that captures a second image;
a parallax image generation unit that generates a parallax image from the first image and the second image;
a region-of-interest detection unit that detects a region of interest that is a region in which a parallax value is considered constant from the parallax image;
an optical axis offset detection unit that detects an optical axis offset amount in a vertical direction between the first image and the second image using pattern information on the region of interest; and
an optical axis offset correction unit that corrects an optical axis offset on the basis of the optical axis offset amount.

2. The imaging device according to claim 1, wherein the region-of-interest detection unit:
creates a distribution of parallax frequency indicating the number of coordinates associated with the parallax value with respect to vertical-direction coordinates of the parallax image or with respect to divisions of the parallax image equally divided in the vertical direction; and
detects the region of interest from a vertical-direction coordinate or division at which the parallax frequency is equal to or greater than a first threshold value.

3. The imaging device according to claim 2, wherein the region-of-interest detection unit:
creates a distribution of the parallax value with respect to horizontal-direction coordinates of the parallax image for the vertical-direction coordinate or division at which the parallax frequency is equal to or greater than the first threshold value, and
detects a region in which the parallax value is considered constant in the distribution of the parallax value as the region of interest.

4. The imaging device according to claim 3, wherein
the region-of-interest detection unit detects the region in which the parallax value is considered constant as the region of interest when a horizontal-direction width thereof is equal to or greater than a second threshold value.

5. The imaging device according to claim 2, wherein an edge strength of each of the coordinates associated with the parallax value is equal to or greater than a third threshold value.

6. The imaging device according to claim 1, wherein the region-of-interest detection unit:
learns a preceding vehicle and a road sign as templates in advance, and
detects the region of interest through template matching.

7. The imaging device according to claim 1, when a plurality of the regions of interest are detected, the optical axis offset detection unit detects the optical axis offset amount in the vertical direction by preferentially using a region of interest occupying a large area of the parallax image.

8. The imaging device according to claim 1, wherein the region-of-interest detection unit detects at least one the region of interest, and
the optical axis offset detection unit detects a translational optical axis offset amount in the vertical direction between the first image and the second image using pattern information on the at least one region of interest.

9. The imaging device according to claim 1, wherein the region-of-interest detection unit detects two or more the regions of interest, and
the optical axis offset detection unit detects a rotational optical axis offset amount in the vertical direction between the first image and the second image using pattern information on the two or more regions of interest.

10. The imaging device according to claim 9, wherein the optical axis offset detection unit determines an approximate straight line from a group of points represented by a combination of horizontal-direction coordinates of the regions of interest and vertical-direction optical axis offset amounts of the regions of interest, and
the rotational optical axis offset amount is a slope of the approximate straight line.
